# EUROPEAN PATENT SPECIFICATION

(11) **EP 0 855 210 B1**
(45) Date of publication and mention of the grant of the patent: **04.06.2003**
(21) Application number: 98101090.3
(22) Date of filing: 22.01.1998
(51) Int. Cl.: B01D 53/94, B01J 29/12, B01J 29/74

(54) **Catalyst for purifying exhaust gas**
Katalysator zum Reinigen von Abgas
Catalysator pour purifier le gaz d'échappement

(30) Priority: 22.01.1997 JP 943897
(43) Date of publication of application: 29.07.1998
(73) Proprietor: Mazda Motor Corporation, Aki-gun Hiroshima-ken (JP)
(72) Inventor: Ueoka, Toshitsugu, Higashihiroshima-shi, Hiroshima (JP); Kurokawa, Takahiro, Hiroshima-shi, Hiroshima (JP); Okamoto, Kenji, Hiroshima-shi, Hiroshima (JP); Sumida, Hirosuke, Hiroshima-shi, Hiroshima (JP)
(74) Representative: Laufhütte, Dieter, Dr.-Ing.

(56) References cited:
- EP-A- 0 186 399
- EP-A- 0 454 239
- GB-A- 2 163 177
- DATABASE WPI Section Ch, Week 9235 Derwent Publications Ltd., London, GB; Class E36, AN 92-288545 XP002078444 & JP 04 197 447 A (RIKEN CORP)

## Description

This invention relates to a catalyst for purifying exhaust gases from an automobile engine according to the first part of claim 1, and furthermore, to use of such a catalyst for purifying the exhaust gases of a diesel engine.

Catalysts for purifying exhaust gases from an automobile engine typically use zeolite as a support material for catalytic metals. For example, as described in Japanese Unexamined Patent Application No. 5- 220403, a catalyst utilizes β-zeolite to support copper (Cu) and alkali earth metals or rare earth metals and is often used as a NOx purifying catalyst to eliminate or significantly lower an emission level of oxides of nitrogen (Nox) into the atmosphere with oxygen surplus. The utilization of β-zeolite is made with an effect of improving the heat-resistance of the catalyst. Alkali earth metals or rare earth metals prevent catalytic metals such as copper (Cu), which play a role of increasing activity of the catalyst through adsorption of oxides of nitrogen (Nox), from moving and cohering so as thereby to improve the heat-resistance of the catalyst. The above mentioned publication teaches magnesium (Mg), calcium (Ca), strontium (St) and barium (Ba) as alkali earth metals and lanthanum (La), cerium (Ce), neodymium (Nd), yttrium (Y), protactinium (Pr) and samarium (Sm) as rare earth metals.

The catalyst of the type having zeolite for supporting copper (Cu) shows its substantial activity only at temperatures higher than approximately 300°C and fails to eliminate or significantly reduce harmful emissions in engine exhaust at low temperatures. In particular in the case where exhaust, such as from a diesel engine, is at a high level of the concentration of oxygen and at low temperatures, the catalyst does not work with intended effects.

A catalyst for purifying the exhaust gases from an automobile engine according to the preamble of claim 1 is known from JP 04-197447. The said document teaches a Nox conversion catalyst comprising alkaline earth metals and alkaline metals, Pt and a Y-type zeolite. Only Mg is disclosed as alkaline earth metal. Although this known catalyst considerably reduces Nox emissions, it is not satisfying with respect to the reduction of carbon monoxide and hydrocarbon emissions at low temperatures.

GB 2 163 177 discloses a dehydrocyclization catalyst comprising a Y-type or X-type zeolite, an alkaline earth metal and a group VIII metal such as platinum, wherein the zeolite has a pore size between 0.6 and 1.5 nm. The said catalyst is not intended for purifying exhaust gases from an engine, but is used in dehydrocyclization processes to produce an aromatics product at rather high temperatures ranging from 450°C to 550°C.

EP 0 186 399 A2 discloses a catalyst for converting propane to propylene, the said catalyst comprising a zeolite, platinum and manganese. This known catalyst helps to convert propane to propylene at temperatures ranging from 300°C to 700°C, which is by far above the low temperature level of an engine exhaust gases.

It is therefore the object of this invention to provide a catalyst capable of effectively eliminating or significantly reducing emissions such as carbon monoxide (CO) and hydrocarbons (HC) in engine exhaust gases even at low temperatures.

According to the present invention, this objective is achieved by the catalyst described in claim 1. Preferred embodiments of the invention are laid down in the dependent claims. Another aspect of the present invention is the use of such a catalyst for purifying the exhaust gases of a diesel engine.

For the purpose of solving the subjects, the inventors have investigated the relationship between the pore diameter of porous material as a catalytic metal support and catalytic conversion performance for emissions from an automobile engine and explored the potential of utilization of the IIa group of metals as a catalytic metal. As a result of these investigations, it was found that, in the cases where the utilization was made of porous materials having a certain range of pore diameters as a catalyst support together with the IIa group of metals as a catalytic metal, the catalyst was able to produce the desired effect. Further, it was also found that the utilization of some noble metals as a principal catalytic metal enhanced the catalytic effect. The catalyst of the invention has been made on the basis of these empirical knowledge.

A catalyst in accordance with the present invention comprises a porous material whose pore diameter is between 0.7 and 20.0 nm as a catalyst support and a mixture of a noble metal or metals and the IIa group of metal or metals including Barium as a catalytic material dispersed in and supported by the catalyst support. The catalyst support has pores of pore diameters greater than 0.7 nm, which is large, is able to trap even large sizes of particles of hydrocarbons (HC). Consequently, the catalyst traps large sizes of particles of hydrocarbons (HC) even before bringing its activity into full play and reduces the hydrocarbons (HC) through oxidization after having gained a necessary temperature for activation. This results in a significantly reducing hydrocarbon emissions into the atmosphere. Unlike copper (Cu), a noble metal as the catalytic metal shows its activity even at relatively low temperatures and, consequently, converts the hydrocarbons (HC) trapped in the pores of the catalyst support and provides a further reduction of emissions such as hydrocarbons (HC) and carbon monoxide (CO) in the exhaust further discharged from an engine over a wide range of temperatures from relatively low to relatively high. The catalyst does an excellent job of reducing harmful emissions in the exhaust from, in particular, a diesel engine which generally contains a great amount of hydrocarbons (HC) and is at a high temperature.

IIa group of metals as the catalytic metal are, on one hand, regarded as providing improvement of dispersion of the noble metal used as a principal catalytic material and are, on the other hand, distinctive of working as an auxiliary catalytic material contributory to converting carbon monoxide (CO) at low temperatures. That is, as will be described later, the low temperature catalytic activity on conversion of carbon monoxide (CO) is greatly improved owing to the IIa group of metal as an additional catalytic metal. While the reason of the great strides on low temperature catalytic activity has not been brought to light, it is considered that hydrogen oxide (H₂O) in the exhaust clings to the IIa group of metal (supported in the form of oxide or carbonate in the catalyst support) and is converted to hydrate which turns out a source of hydrogen oxide (H₂O) and, as a result, a water gas shift reaction caused between carbon monoxide (CO) and hydrogen oxide (H₂O) in the exhaust is activated. In other words, the water gas shift reaction promotes the conversion of carbon monoxide (CO) when the exhaust is at low temperatures, as a result of which, the catalyst is further activated and accelerates the conversion of carbon monoxide (CO) under elevated temperatures.

Discussing the relationship between the pore diameter of support material and the IIa group of metal, since the catalyst support has a relatively large pore diameter, the catalyst is prevented from a decline in catalytic activity due to a block of pores of the support material with the IIa group of metal. That is, the utilization of support material having a large pore diameter permits the IIa group of metal to be received without blocking pores of the support material, yielding improvement of the catalytic activity on, in particular, the conversion of carbon monoxide (CO).

In this instance, too large diameters of pores causes a reduction in specific surface area of the catalyst support which is always undesirable for catalytic activity, in view of which the upper limit of the diameter for most pores of the catalyst is approximately 20 nm.

In accordance with another embodiment of the invention, the catalyst is provided for purifying exhaust gases from a diesel engine and comprises a porous material as a support material which has a pore diameter between 0.7 and 20.0 nm and a mixture of a principal catalytic metal and an auxiliary catalytic metal of IIa group dispersed in and supported as a catalytic metal by the porous material.

Exhaust gases from a diesel engine generally contain a large quantity of hydrocarbons (HC) having 6 to 20 (or 7 to 20) carbon atoms and are at relatively low temperatures. Against such an exhaust gas from a diesel engine, the catalyst of the invention using a support material whose pore diameter is large and disposed in the exhaust line of the diesel engine traps temporarily hydrocarbons (HC) having a large number of carbon atoms even before attaining an activation temperature and prevents them from being discharged into the atmosphere without being converted. While the IIa group of metal enhances dispersion of the principal catalytic metal, which always enhances the catalytic activity, it entraps moisture in the exhaust with the result of accelerating the water gas shift reaction, bringing about the conversion of carbon monoxide at low temperature. Consequently, the catalyst purifies the exhaust gas from the diesel engine with an increased efficiency over a wide range of from low to high temperatures and prevents or significantly reduces carbon monoxide emission from being discharged into the atmosphere without being converted. Further, because of a large diameter of pores, the support material has the advantage of eliminating a pore block with the IIa group of metal.

The utilization may be made of at least one or two of β-zeolite and meso porous silicate as a support material. In order for the exhaust gas purifying catalyst suitable for diesel engines to have improved low temperature catalytic activity, the utilization is made of noble metals as a principal catalytic metal with an effect of purifying the exhaust gas from the diesel engine even at low temperatures.

Barium (Ba) or any combinations of Barium and another one of IIa metals, such as Magnesium (Mg) and Calcium (Ca), are utilized as an auxiliary catalytic metal. Cerium (Ce) or iron (Fe) my be used as an auxiliary catalytic metal in combination with at least Barium.

The catalyst is desirably used in the form of monolith catalytic converter, in the case of which it is suitable to employ a porous material having a pore diameter between 0.7 and 20.0 nm to support a noble metal and barium (Ba) on a monolith carrier.

The catalyst of the invention, comprising a porous support material having a pore diameter between 0.7 and 20.0 nm and a mixture of a noble metal and a IIa metal dispersed in and supported by the porous support material, efficiently purifying the exhaust gas from an engine even at low temperature, which resulting from entrapment of hydrocarbons (HC) having a large number of carbon atoms by means of a function of the support material, enhancement of the low catalytic activity of noble metal, improvement of the dispersion of noble metal by means by the aid of IIa metals, and acceleration of reduction of a carbon monoxide (CO) emission by means of the IIa metals. The catalyst of the invention is especially effective in purifying the exhaust gas from a diesel engine which contains hydrocarbons (HC) having a large number of carbon atoms.

### BRIEF DESCRIPTION OF THE DRAWINGS

The foregoing and other objects and features of the present invention will be clearly understood from the following detailed description of preferred embodiments when read in conjunction with the accompanying drawings in which:
Figure 1 is a table indicating various sample catalysts and their T50 temperatures;
Figure 2 is a graphical diagram showing the relationship between barium (Ba) content and T50 temperature with respect to carbon monoxide (CO) conversion for various support materials;
Figure 3 is a graphical diagram showing the relationship between barium (Ba) content and T50 temperature with respect to hydrocarbons (HC) conversion for various support materials;
Figure 4 is a graphical diagram showing the relationship between pore diameter of a support material and T50 temperature with respect to carbon monoxide (CO) conversion for various support materials; and
Figure 5 is a table indicating various sample catalysts and their conversion efficiency.

### DETAILED DESCRIPTION OF THE PREFERRED EMBODIMENT

The term of "pore diameter" used herein shall mean and refer to the length of a major axis if the pore has an elliptical cross-section, and the term "T50 temperature" used herein shall mean and refer to the temperature of a catalytic converter at its entrance necessary for the catalytic converter to show a catalytic conversion efficiency of 50%.

Various tests were conducted in order to evaluate performance of the catalyst of the invention by using monolith catalytic converters coated with various sample catalysts in accordance with embodiments of the invention.

Slurry of a porous support material and hydrated aluminum with an approximate weight ratio of 10 : 2 mixed with demineralized water was prepared. A catalyst carrier, such as a cordierite honeycomb carrier, was dipped in the slurry for a while and subsequently taken out of the slurry. After blowing on the honeycomb carrier to remove an excessive part of the slurry, the catalyst carrier was heated to dry the slurry. These steps (called wash coating) were repeated until a coating layer of the support material of 80 to 150 g per one litter of catalyst carrier was formed on the honeycomb carrier. The support material coated honeycomb carrier was then baked at approximately 500°C for two hours in an furnace. Thereafter, the support material coated honeycomb carrier was dipped in a water solution of catalytic metals separately prepared until sucking up the entire amount of the solution and then dried at 200°C for two hours and baked at approximately 500 to 600°C for two hours in the electric furnace. The water solution of catalytic metals was prepared by dissolving a nitric acid solution of dinitro-diamine platinum and barium nitrate in demineralized water. The catalytic metal water solution was prepared such that the amounts of platinum (Pt) and barium (Ba) remaining on the honeycomb carrier were 0.5 to 2.0 g per one litter of catalyst carrier and 0.04 to 0.56 mole per one litter of catalyst carrier, respectively.

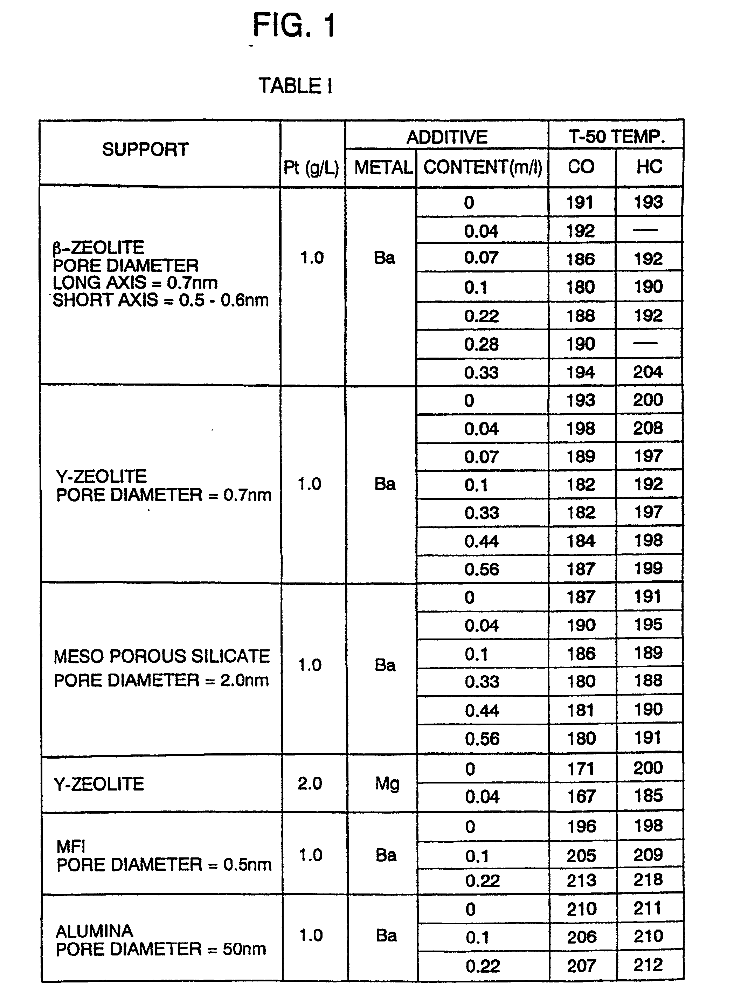

In that manner, samples of monolith converters were prepared as having catalysts containing different amount of the support material and barium (Ba) as shown in Table I in Figure 1 in order to measure catalyst temperatures with regard to the catalyst conversion efficiency on carbon monoxide (CO) and hydrogen oxide (H₂O) and subjected to various evaluation tests with simulated exhaust gas. Each test sample had a support coating of 100 gram per one litter of catalyst carrier and contained impurities less than 1.0%. The exhaust gas was simulated as the exhaust from average diesel engines.

The simulated exhaust gas had a composition of 800 ppm C₃H₆, 900 ppm CO, 250 ppm NO, 10 % O₂, 10 % H₂O, 4.5 % CO₂ and a remainder N₂ and a space velocity (SV) of 50,000 h⁻¹. The reason for the utilization of a hydrocarbon (HC) as having not 6 to 20 carbon atoms but 3 carbon atoms was that it was hard to produce simulated exhaust gas containing a hydrocarbon (HC) as having 6 to 20 carbon atoms and there was, however, no difficulty in evaluating effects of the sample catalysts. The results of evaluation tests are indicated in Figures 1 - 3.

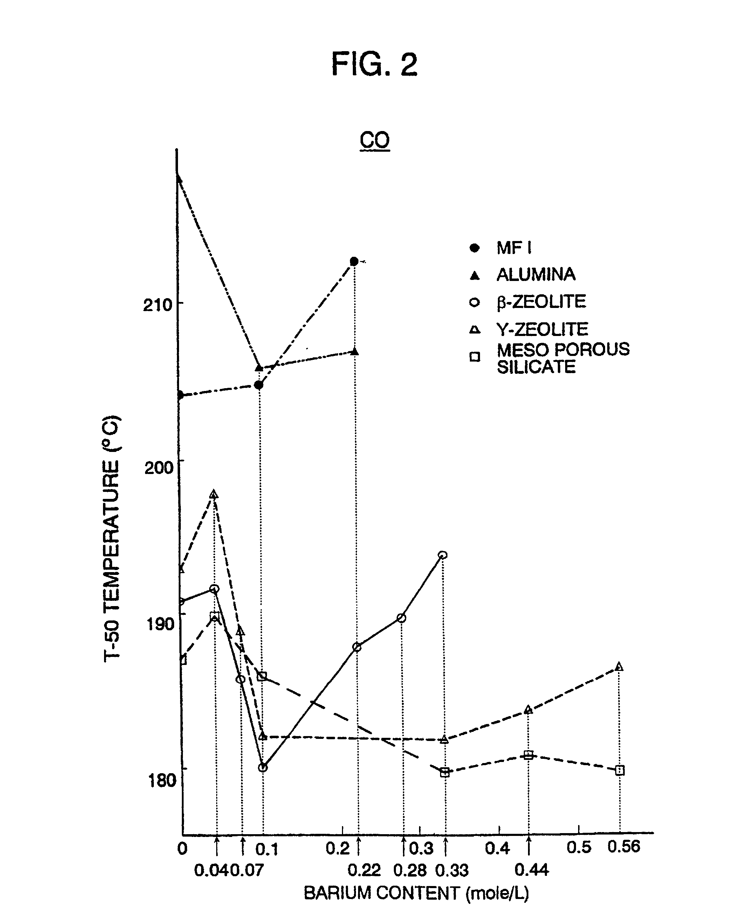

As clearly proved in Figures 1 and 2, regarding the sample catalyst of the type using β-zeolite as a support material, such as VALFOR-CP811 (trade name of PQ Corporation) which has elliptical pores having long axes of approximately 0.7 nm and short axes between 0.5 and 0.6 nm, in the case where the content of barium (Ba) as an additive is 0.05 to 0.28 mole per litter, the T50 temperatures in relation to carbon monoxide (CO) is lower than 190°C at which favorable low temperature catalytic activity is shown. The content of barium (Ba) of 0.07 to 0.22 mole per litter provides excellent low temperature catalytic activity. Regarding the catalyst of the type using a Y-zeolite (FAU) support, such as VALFOR-CBV720 (trade name of PQ Corporation) which has a pore diameter of approximately 0.7 nm, in the case where the content of barium (Ba) as an additive is greater than 0.07 mole per litter, the T50 temperatures in relation to carbon monoxide (CO) is lower than 190°C at which favorable low temperature catalytic activity is shown. The content of barium (Ba) of 0.1 to 0.33 mole per litter provides excellent low temperature catalytic activity. It is difficult for the Y-zeolite to support barium (Ba) more than 0.56 mole per litter, which is the upper limit.

Regarding the catalyst of the type using meso porous silicate (MPS) as a support which has a pore diameter of approximately 0.2 nm, in the case where the content of barium (Ba) as an additive is greater than 0.1 mole per litter, the T50 temperatures in relation to carbon monoxide (CO) is lower than 190°C at which favorable low temperature catalytic activity is shown. The content of barium (Ba) of 0.33 to 0.56 mole per litter provides excellent low temperature catalytic activity. The meso porous silicate is difficult to support barium (Ba) more than 0.56 mole per litter, which is the upper limit.

The meso porous silicate was prepared in the following manner.

A sodium hydroxide solution was made as a solution A by dissolving 3.35 grm sodium hydroxide in 85.0 grm demineralized water, and a cetyl trimetylammonium chloride solution (N(C₁₆H₃₃)(CH₃)₃) was separately made as a solution B by dissolving 35 grm cetyl trimetylammonium chloride in 104 grm demineralized water at a rate of 10 ml/min. The solution A was added with drops of tetraethyl orthosilicate (Si(C₂H₅O)₄) while being stirring and, thereafter, stirred up for approximately five minutes. The solution B was added in the solution A at a rate of 10 ml/min while stirring the solution A. A mixture of the solutions A and B in the form of gel was added with sulfuric acid (H₂SO₄) and/or sodium hydroxide (NaOH) so as to have an intended pH value between 9 and 11. The pH adjusted gel mixture was added with drops of aluminum sulfate (Al₂SO₄)₃) at a rate of 1 ml/min and stirred in an ultradisperser for 15 minutes. Hydrothermal composing treatment was taken by heating the resultant gel mixture put in a bottle from a room temperature to approximately 100°C within three to four hours and remaining it at 100°C for 72 hours, forming rough crystals of meso porous silicate crystals. After water-washing treatment, the meso porous silicate crystals were dried up and heated from a room temperature to 540°C within three to four hours and remained at 540°C for three hours for baking. Na-type crystals of meso porous silicate produced as result of the baking were put in an ammonium nitrate solution (NH₄NO₃) at 80°C for eight hours for ion-exchange treatment. After leaving the Na-type crystals of meso porous silicate for a whole day and night as they were, the meso porous silicate crystals were washed with water and dried up. Thereafter, the Na-type meso porous silicate crystals were heated from a room temperature to 540°C within three to four hours and remained at 540°C for two hours for baking. In this manner, H-type crystals of meso porous silicate were produced.

It is considered to be one of the reasons for an increase in the T50 temperature which the catalyst of the type using β-zeolite or Y-zeolite as a support material provides when a certain barium content is exceeded is that pores of the zeolite are blocked with barium particles with the result of loosing the function as an auxiliary catalytic material. As compared with the supports having large pore diameters (MFI) as described above, such as VALFOR-CBV8020 (trade name of PQ Corporation) which has a pore diameter of 0.5 nm, shows no decline in the T50 temperature even containing barium (Ba), rather provides an increase in the T50 temperature with an increase in the barium content. This is considered as a result from that barium particles block pores of MIF support material. In the case where alumina (Al) (which has a pore diameter of approximately 50 nm) is used as a support, there is no significant effect owing to a barium additive.

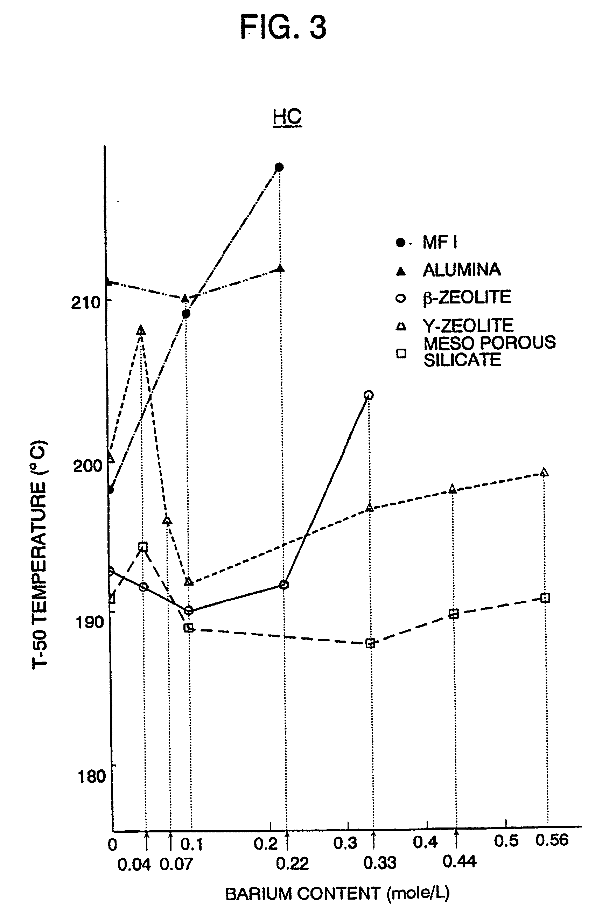

As proved from Figures 1 and 3 showing to the result of evaluation tests regarding hydrocarbons (HC), the catalyst of the type using a β-zeolite support shows lower T50 temperatures and favorable low temperature catalytic activity when containing approximately 0.04 to 0.22 mole per litter of barium additive than when not containing any barium additive. Regarding the catalyst of the type using a Y-zeolite support, T50 temperatures is lower when the catalyst contains more than approximately 0.07 mole per litter barium additive than when it contains no barium additive. It is proved that the range of contents of the barium additive favorable for low temperature catalytic activity is, in particular, between 0.07 and 0.33 mole per litter. Regarding the catalyst of the type using a meso porous silicate (MPS) support, T50 temperatures is lower when the catalyst contains more than approximately 0.1 mole per litter barium additive than when it contains no barium additive. It is proved that the range of contents of the barium additive favorable for low temperature catalytic activity is, in particular, between 0.1 and 0.33 mole per litter.

As compared with the above, the catalyst of the type having an MIF support, which has small pore diameters, shows no decline in T50 temperature owing to a barium additive, rather provides an increase in the T50 temperature with an increase in the barium content. The catalyst of the type having an alumina support, a barium additive does not provide any effect on T50 temperature.

From the results described above, it is concluded that, taking the catalytic conversion efficiency for carbon monoxide (CO) and hydrocarbons (HC) into consideration, a favorable content of the barium additive is between 0.07 and 0.22 mole per litter for the β-zeolite support, between 0.07 and 0.56 mole per litter, more suitably between 0.1 and 0.33 mole per litter, for the Y-zeolite support, and between 0.1 and 0.56 mole per litter, more suitably around 0.33 mole per litter, for the meso porous silicate support.

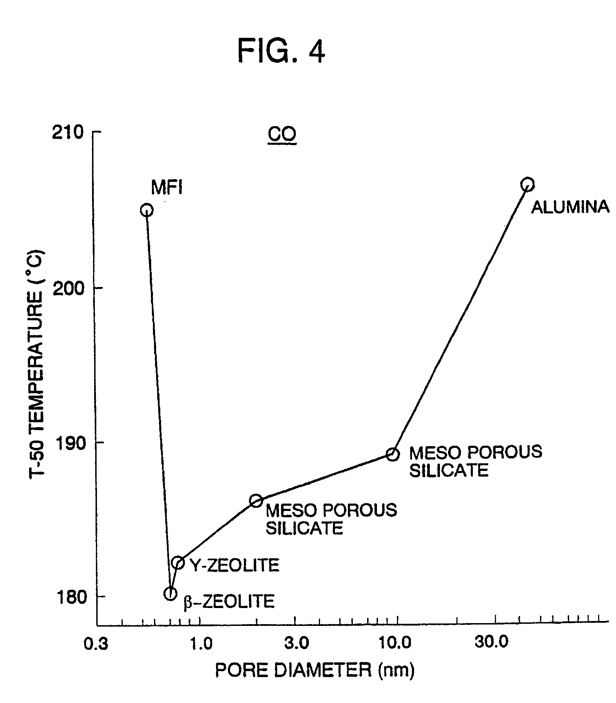

Figure 4 shows the relationship between pore diameter of a support and T50 temperature regarding carbon monoxide (CO) in which the coating weight of support on monolith catalyst carrier is 100 gram per litter, the contents of platinum (Pt) and barium (Ba) as additives are 1.0 gram per litter and 0.1 mole per litter, respectively.

As apparent in Figure 4, the utilization of a support having pore diameters between 0.7 and 20.0 nm provides a decline in T50 temperature relating to the catalytic conversion efficiency for carbon monoxide (CO) and yields a favorable effect on low temperature catalytic activity of the catalyst. In particular, the utilization is made of a support having pore diameters between 0.7 and 10. 0 nm with a significant effect of providing T50 temperature lower than 190°C.

Figure 1 further shows T50 temperatures for catalysts of the type using a Y-zeolite support added with or without magnesium (Mg), which is one of the IIa group of metal, in place of barium (Ba). The content of platinum (Pt) as a catalytic metal supported by the Y-zeolite support was 2.0 gram per litter in both sample catalysts. As the result of evaluation, a magnesium additive yields an effect of improving the low temperature catalytic activity of the catalyst as well as barium (Ba).

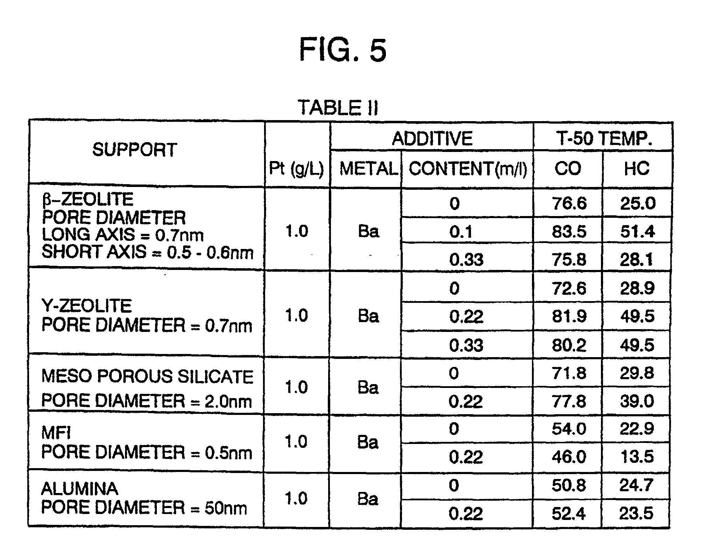

Practical tests were conducted with regard to various catalysts installed in an exhaust line of an automobile engine to survey the catalytic conversion efficiency for hydrocarbons (HC) and carbon monoxide (CO). Various sample catalysts were prepared in the same manner as previously described, which are shown in Table II in Figure 5. The practical tests were carried out by using a car equipped with an inline four cylinder diesel engine of 1,700 cc displacement with an indirect fuel injection system and a turbo-charger. When the car was driven under a driving mode of ECER83, contents of emissions, hydrocarbons (HC), particulates (large particle sizes of hydrocarbons having 20 to 30 carbon atoms) and carbon monoxide (CO), directly from the diesel engine were 0.25 g/km, 0.05 g/km and 0.67 g/km, respectively. Two monolithic converters, each using a honeycomb carrier and having a capacity of 0.8 litter, were placed under a vehicle floor in a position where the diesel engine is installed. The honeycomb carrier has a cell wall thickness of 6 mil (approximately 0.15 mm) and a cell density of 400 cpsi (cells per square inch) which is equivalent to 62 cells/cm²). The results are shown in Table II in Figure 5.

As shown in Table II, the catalyst of the type using a β-zeolite support, a Y-zeolite support or a meso porous silicate provides an increase in the catalytic conversion efficiency for hydrocarbons (HC) and carbon monoxide (CO) owing to a barium additive. Similarly to the result of evaluation tests with the simulated exhaust gas, it is observed that the catalyst using a β-zeolite support has a tendency to reduce its catalytic conversion efficiency for hydrocarbons (HC) and carbon monoxide (CO) due to a content of barium additive in excess. On the other hand, the catalyst of the type using a zeolite (MFI) support suffers a decline in the catalytic conversion efficiency for hydrocarbons (HC) and carbon monoxide (CO) from a barium additive, which is similar to the case where it is tested with the simulated exhaust gas described previously.

## Claims

1. An exhaust gas purifying catalyst for purifying exhaust gases containing H₂O and CO from an automobile engine, said exhaust gas purifying catalyst comprising a catalyst layer being supported on a substrate and comprising a support material and a mixture of a noble metal and a IIa group of metal dispersed in and supported by said support material, **characterized in that** said support material comprises one of a β-type zeolite and a mesopore silicate and has a pore diameter between 0.7 and 20.0 nm, and that said IIa group of metal is barium (Ba).

2. An exhaust gas purifying catalyst according to claim 1, wherein the support material comprises β-type zeolite and a content of the said Ba is between 0.05 and 0.28 mol/L.

3. An exhaust gas purifying catalyst according to claim 1, wherein said support material comprises a mesopore silicate and a content of the said Ba is between 0.33 and 0.56 mol/L.

4. Use of an exhaust gas purifying catalyst according to one of the preceding claims for purifying the exhaust gases of a diesel engine.

## Patentansprüche

1. Abgas-Reinigungskatalysator zur Reinigung von Abgasen, die H₂O und CO enthalten, von einem Kraftfahrzeugmotor, wobei der Abgas-Reinigungskatalysator eine Katalysatorschicht, die auf einem Substrat aufgetragen ist, umfasst und ein Trägermaterial und eine Mischung eines Edelmetalls und eines Metalls der Gruppe IIa, dispergiert in und geträgert durch das Trägermaterial, umfasst, **dadurch gekennzeichnet, dass** das Trägermaterial eines aus einem Zeolith vom β-Typ und einem Mesoporen-Silicat umfasst und einen Porendurchmesser von 0,7 bis 20,0 nm aufweist und das Metall der Gruppe lla Barium (Ba) ist.

2. Abgas-Reinigungskatalysator gemäß Anspruch 1, bei dem das Trägermaterial Zeolith vom β-Typ und einen Gehalt des Ba von 0,05 bis 0,28 Mol/l umfasst.

3. Abgas-Reinigungskatalysator gemäß Anspruch 1, bei dem das Trägermaterial ein Mesoporen-Silicat und einen Gehalt des Ba von 0,33 bis 0,56 Mol/l umfasst.

4. Verwendung eines Abgas-Reinigungskatalysators gemäß mindestens einem der vorhergehenden Ansprüche zur Reinigung des Abgases eines Dieselmotors.

## Revendications

1. Catalyseur purifiant le gaz d'échappement destiné à purifier les gaz d'échappement de moteur automobile contenant du H₂O et du CO, ledit catalyseur purifiant le gaz d'échappement comprenant une couche de catalyseur supportée sur un substrat et comprenant un matériau de support et un mélange de métal noble et de métal du groupe IIa dispersés et supportés sur ledit matériau de support, **caractérisé en ce que** ledit matériau de support comprend un support zéolithe β et un silicate mésoporeux et possède un diamètre de pore entre 0,7 et 20,0 nm, et ledit métal de groupe IIa de métal est le baryum (Ba).

2. Catalyseur purifiant le gaz d'échappement selon la revendication 1, dans lequel le matériau de support comprend de la zéolithe de type βet une teneur en dit Ba entre 0,5 et 0,28 mol/L.

3. Catalyseur purifiant le gaz d'échappement selon la revendication 1, dans lequel ledit matériau de support comprend un silicate mésoporeux et une teneur en dit Ba entre 0,33 et 0,56 mol/L.

4. Utilisation d'un catalyseur purifiant le gaz d'échappement selon l'une quelconque des revendications précédentes pour purifier les gaz d'échappement d'un moteur diesel.
